(19) Europäisches Patentamt
European Patent Office
Office européen des brevets

(11) Veröffentlichungsnummer: **0 356 851 B1**

# (12) EUROPÄISCHE PATENTSCHRIFT

(45) Veröffentlichungstag der Patentschrift: **15.12.93**

(51) Int. Cl.$^5$: **C09B 45/01**, C09B 67/36

(21) Anmeldenummer: **89115341.3**

(22) Anmeldetag: **19.08.89**

## (54) Verfahren zur Herstellung von Lösungen von 1:2-Chromkomplex-Azofarbstoffen.

(30) Priorität: **31.08.88 DE 3829518**

(43) Veröffentlichungstag der Anmeldung:
**07.03.90 Patentblatt 90/10**

(45) Bekanntmachung des Hinweises auf die Patenterteilung:
**15.12.93 Patentblatt 93/50**

(84) Benannte Vertragsstaaten:
**CH DE FR GB IT LI**

(56) Entgegenhaltungen:
**EP-A- 0 017 114**
**EP-A- 0 098 965**
**CA-A- 612 466**
**DE-A- 2 634 512**

**CHEMICAL ABSTRACTS, Band 108, Nr. 24, Juni 1988, Seite 86, Zusammenfassung Nr. 206265x, Columbus, Ohio, US; & CS-A-239 541 (K. RUZICKA et al.) 01-06-1987**

**CHEMICAL ABSTRACTS, Band 108, Nr. 24, Juni 1988, Seite 86, Zusammenfassung Nr. 206266y, Columbus, Ohio, US; & CS-A-240 098 (K. RUZICKA et al.) 01-07-1987**

(73) Patentinhaber: **BASF Aktiengesellschaft**
**Carl-Bosch-Strasse 38**
**D-67063 Ludwigshafen(DE)**

(72) Erfinder: **Kaack, Hermann, Dr.**
**Am Meckenheimer Weg 1**
**D-6701 Ruppertsberg(DE)**
Erfinder: **Kraemer, Artur**
**Goethestrasse 17**
**D-6701 Roedersheim-Gronau(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 356 851 B1

Rank Xerox (UK) Business Services
(3.10/3.6/3.3.1)

**Beschreibung**

Die vorliegende Erfindung betrifft ein neues Verfahren zur Herstellung von stabilen wäßrigen Lösungen von 1:2-Chromkomplex-Azofarbstoffen durch Chromierung der Azofarbstoffe bei einem pH-Wert von 4,0 bis 6,5 in Gegenwart einer aromatischen Hydroxycarbonsäure, wobei man dem Reaktionsgemisch vor, während oder nach der Chromierung ein Alkanolamin und/oder eine Glykolverbindung zusetzt.

Die Verwendung von Salicylsäure bei der Herstellung von Chromkomplex-Azofarbstoffen ist aus der DD-A-104 003, DD-A-142 201, DD-A-151 003, EP-A-156 768 oder EP-A-157 733 bekannt.

In den Verfahren des Standes der Technik wird die Chromierungsreaktion üblicherweise im stark sauren oder im basischen Milieu durchgeführt, wobei der Chromkomplex-Azofarbtoff als Feststoff isoliert wird.

Aufgabe der vorliegenden Erfindung war es, ein neues Verfahren zur Herstellung von 1:2-Chromkomplex-Azofarbstoffen bereitzustellen, wobei die Farbstoffe in einfacher Weise direkt in einer stabilen flüssigen Einstellung anfallen sollten. Die Umsetzung sollte dabei in kurzer Zeit ablaufen, und der Gehalt an organischem Lösungsmittel in den resultierenden flüssigen Farbstoffpräparationen sollte gering sein.

Es wurde nun gefunden, daß die Herstellung von stabilen wäßrigen Lösungen von 1:2-Chromkomplex-Azofarbstoffen der Formel I

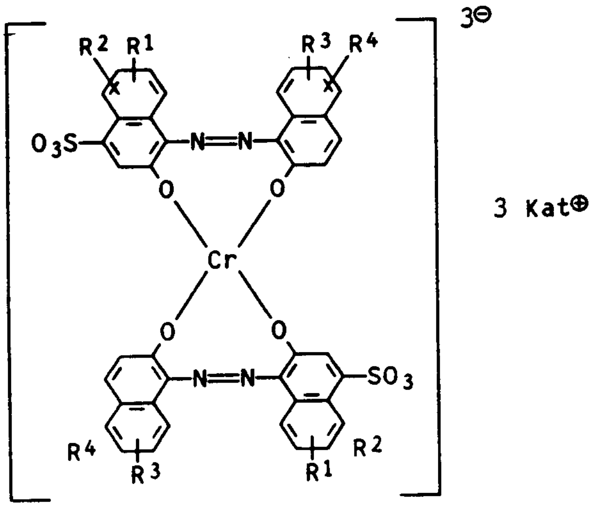

(I),

in der

$R^1$ und $R^2$ gleich oder verschieden sind und unabhängig voneinander jeweils Wasserstoff, Chlor, Brom, Nitro oder Hydroxysulfonyl,

$R^3$ und $R^4$ gleich oder verschieden sind und unabhängig voneinander jeweils Wasserstoff, Hydroxy, Amino, Hydroxysulfonyl oder Carboxyl und

$Kat^{\oplus}$ das Äquivalent eines Kations bedeuten, durch Umsetzung der chromfreien o,o'-Dihydroxyazofarbstoffe mit einer Chrom(III)verbindung bei atmosphärischem Druck und bei einer Temperatur von 90 bis 105 °C vorteilhaft gelingt, wenn man die Umsetzung bei einem pH-Wert von 4,0 bis 6,5 in Gegenwart einer aromatischen Hydroxycarbonsäure der Formel II

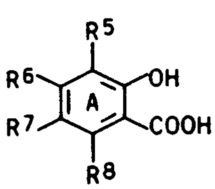

(II),

in der

$R^5$, $R^6$, $R^7$ und $R^8$ gleich oder verschieden sind und unabhängig voneinander jeweils Wasserstoff, Chlor, Brom, Hydroxysulfonyl oder Carboxyl bedeuten und der Ring A gegebenenfalls benzoanelliert ist, wobei der anellierte Benzoring noch substituiert sein kann,

vornimmt und dem Reaktionsgemisch vor, während oder nach der Umsetzung ein Alkanolamin der Formel

III

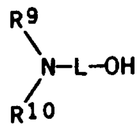 (III),

in der

$R^9$ und $R^{10}$ gleich oder verschieden sind und unabhängig voneinander jeweils Wasserstoff, $C_1$-$C_4$-Alkyl oder durch Hydroxy oder $C_1$-$C_4$-Alkoxy substituiertes $C_2$-$C_4$-Alkyl und

L $C_2$-$C_3$-Alkylen bedeuten,

und/oder eine Glykolverbindung der Formel IV

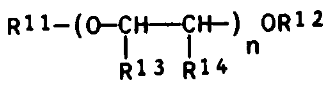 (IV),

in der

n 1 bis 18,

$R^{11}$ und $R^{12}$ gleich oder verschieden sind und unabhängig voneinander jeweils Wasserstoff, $C_1$-$C_{10}$-Alkyl, Formyl oder Acetyl und

$R^{13}$ und $R^{14}$ gleich oder verschieden sind und unabhängig voneinander jeweils Wasserstoff, $C_1$-$C_{10}$-Alkyl oder 2-($C_1$-$C_{10}$-Alkoxy)ethyl bedeuten,

zusetzt.

Alle in den obengenannten Formeln III und IV auftretenden Alkylgruppen können sowohl geradkettig als auch verzweigt sein.

Reste $R^9$ und $R^{10}$ sind z.B. Methyl, Ethyl, Propyl, Isopropyl, Butyl, Isobutyl, sec-Butyl, 2-Hydroxyethyl, 2- oder 3-Hydroxypropyl, 2- oder 4-Hydroxybutyl, 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 4-Methoxybutyl oder 2- oder 4-Ethoxybutyl.

Reste $R^{11}$, $R^{12}$ $R^{13}$ und $R^{14}$ sind beispielsweise Methyl, Ethyl, Propyl, Isopropyl, Butyl, Isobutyl, sec-Butyl, Pentyl, Isopentyl, Neopentyl, tert-Pentyl, Hexyl, Isohexyl, Heptyl, Octyl, 2-Ethylhexyl, Isooctyl, Nonyl, Isononyl, Decyl oder Isodecyl (die Bezeichnungen Isooctyl, Isononyl und Isodecyl sind Trivialbezeichnungen und stammen von den nach der Oxosynthese erhaltenen Alkoholen - vgl. dazu Ullmanns Enzyklopädie der Technischen Chemie, 4. Auflage, Band 7, Seiten 215 bis 217, sowie Band 11, Seiten 435 und 436).

Reste $R^{13}$ und $R^{14}$ sind weiterhin z.B. 2-Methoxyethyl, 2-Ethoxyethyl, 2-Propoxyethyl, 2-Isopropoxyethyl, 2-Butoxyethyl, 2-Isobutoxyethyl, 2-Pentyloxyethyl, 2-Hexyloxyethyl, 2-Isohexyloxyethyl, 2-Heptyloxyethyl, 2-Octyloxyethyl, 2-(2-Ethylhexyloxy)ethyl, 2-Nonyloxyethyl oder 2-Decyloxyethyl.

Reste L sind z.B. Ethylen oder 1,2- oder 1,3-Propylen.

Das Äquivalent eines Kations $Kat^{\oplus}$ leitet sich z.B. vom Proton oder von Metall- oder Ammoniumionen ab. Metallionen sind insbesondere die Lithium-, Natrium- oder Kaliumionen. Unter Ammoniumionen im erfindungsgemäßen Sinne sind unsubstituierte oder substituierte Ammoniumionen zu verstehen. Substituierte Ammoniumionen sind z.B. Monoalkyl-, Dialkyl-, Trialkyl-, Tetraalkyl- oder Benzyltrialkylammoniumionen oder solche Kationen, die sich von stockstoffhaltigen fünf- oder sechsgliedrigen gesättigten Heterocyclen ableiten, wie Pyrrolidinium-, Piperidinium-, Morpholinium-, Piperazinium- oder N-Alkylpiperaziniumkationen oder deren N-monoalkyl- oder N,N-dialkylsubstituierte Produkte. Unter Alkyl ist dabei im allgemeinen geradkettiges oder verzweigtes $C_1$-$C_{20}$-Alkyl zu verstehen, das durch Hydroxylgruppen substituiert und/oder durch Sauerstoffatome unterbrochen sein kann.

Wenn der Ring A in Formel II benzoanelliert ist und der anellierte Benzoring noch weitere Substituenten aufweist, kommen z.B. Carboxyl, Hydroxy, Chlor, Brom oder Hydroxysulfonyl als solche Substituenten in Betracht.

Bei den Chrom(III)verbindungen, die im erfindungsgemäßen Verfahren als Chromierungsreatentien dienen, handelt es sich um die üblichen an sich bekannten Chromverbindungen. Als solche sind beispielsweise Chrom(III)salze, wie Chrom(III)formiat, Chrom(III)acetat, Chrom(III)chlorid, Chrom(III)sulfat oder Chrom(III)nitrat, basische Chromsalze, wie basische Chrom(III)sulfate oder gemischte basische Chrom(III)formiate und -sulfate oder auch Chrom(III)oxid zu nennen.

Bevorzugt ist eine Verfahrensweise, wobei man als aromatische Hydroxycarbonsäure II Salicylsäure, 4-Hydroxyisophthalsäure, Naphth-2-ol-3-carbonsäure, 2-Hydroxy-4-hydroxysulfonylbenzoesäure oder 2-Hydroxy-5-hydroxysulfonylbenzoesäure verwendet.

Weiterhin bevorzugt ist eine Verfahrensweise wobei man ein Alkanolamin der Formel III verwendet, in der $R^9$ und $R^{10}$ gleich oder verschieden sind und unabhängig voneinander jeweils Wasserstoff, Methyl, Ethyl oder durch Hydroxy, Methoxy oder Ethoxy substituiertes $C_2$-$C_3$-Alkyl bedeuten. Insbesondere sind als Alkanolamine der Formel III Mono-, Di- oder Triethanolamin, Mono-, Di- oder Triisopropanolamin, N-Methyl- oder N,N-Dimethylethanolamin, N-Ethyl- oder N,N-Diethylethanolamin, N-(2-Methoxyethyl)-oder N,N-Bis(2-methoxyethyl)ethanolamin oder N-(2-Ethoxyethyl)- oder N,N-Bis(2-ethoxyethyl)ethanolamin zu nennen.

Weiterhin bevorzugt ist eine Verfahrensweise, wobei man eine Glykolverbindung der Formel IV verwendet, in der n 1 bis 10, $R^{11}$ und $R^{12}$ gleich oder verschieden sind und unabhängig voneinander jeweils Wasserstoff, $C_1$-$C_8$-Alkyl, insbesondere $C_1$-$C_4$-Alkyl, Formyl oder Acetyl und $R^{13}$ und $R^{14}$ gleich oder verschieden sind und unabhängig voneinander jeweils Wasserstoff, $C_1$-$C_8$-Alkyl, insbesondere $C_1$-$C_4$-Alkyl, oder 2-($C_1$-$C_8$-Alkoxy)ethyl, insbesondere 2-($C_1$-$C_4$-Alkoxy)ethyl, bedeuten.

Besonders bevorzugt ist eine Verfahrensweise, wobei man eine Glykolverbindung der Formel IV verwendet, in der $R^{11}$ und $R^{12}$ gleich oder verschieden sind und unabhängig voneinander jeweils Wasserstoff, $C_1$-$C_4$-Alkyl, Formyl oder Acetyl, $R^{13}$ und $R^{14}$ gleich oder verschieden sind und unabhängig voneinander jeweils Wasserstoff oder Methyl und n 1, 2 oder 3 bedeuten. Insbesondere sind als Glykolverbindungen der Formel IV Ethylenglykol, Ethylenglykolmonomethyl-, -monoethyl-, -monopropyl- oder -monobutylether, Diethylenglykol, Diethylenglykolmonomethyl-, -monoethyl-, -monopropyl- oder -monobutylether, Triethylenglykol, Triethylenglykolmonomethyl-, -monoethyl-, -monopropyl- oder -monobutylether, Dipropylenglykol, die jeweiligen Ameisensäure- oder Essigsäuremono- oder -diester der genannten Verbindungen oder Ethylen- oder Propylenglykoldimethyl-, -diethyl-, -dipropyl- oder -dibutylether zu nennen.

Monovalente Kationen $Kat^{\oplus}$, die beim erfindungsgemäßen Verfahren bevorzugt sind, sind z.B. Protonen, Lithium-, Natrium- oder Kaliumionen, unsubstituierte Ammoniumionen oder substituierte Ammoniumionen der Formel V

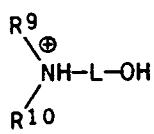

(V),

in der $R^9$, $R^{10}$ und L jeweils die obengenannte Bedeutung besitzen.

Das erfindungsgemäße Verfahren wird zweckmäßig so durchgeführt, daß man die chromfreien o,o'-Dihydroxazofarbstoffe, die den 1:2-Chromkomplex-Azofarbstoffen zugrundeliegen, als wäßrige Suspension oder Lösung vorlegt und die aromatische Hydroxycarbonsäure der Formel II sowie die Chrom(III)-verbindungzugibt. Danach wird das Reaxtionsgemisch unter Rühren auf eine Temperatur von 90 bis 105 °C erhitzt, wobei ein pH-Wert von 4,0 bis 6,5, vorzugsweise 4,0 bis 5,5 und insbesondere 4,0 bis 4,5 eingehalten wird. Die Regulierung des pH-Werts geschieht im allgemeinen durch Zugabe von Mineralsäuren, wie Schwefelsäure und/oder Alkalihydroxiden, wie Natriumhydroxid.

Vor, während oder nach der Umsetzung wird dem Reaktionsgemisch dabei ein Alkanolamin der Formel III und/oder eine Glykolverbindung der Formel IV zugesetzt
Wenn die Chromierungsreaktion beendet ist, was im allgemeinen 2 bis 3 Stunden in Anspruch nimmt, wird das Reaktionsgemisch abgekühlt. Die resultierende Farbstofflösung ist sofort gebrauchsfertig.

In einer bevorzugten Verfahrensweise wird im Eintopfverfahren gearbeitet, Dies bedeutet, daß im Fall der symmetrischen 1:2-Chromkomplex-Azofarbstoffe der dem Komplex zugrundeliegende o,o'-Dihydroxyazofarbstoff auf an sich bekanntem Wege durch Kupplung der gegebenenfalls substituierten 1-Diazonaphth-2-ol-4-sulfonsäure mit dem gegebenenfalls substituierten Naphth-2-ol hergestellt und das resultierende Reaktionsgemisch erfindungsgemäß chromiert wird. Im Fall der unsymmetrischen 1:2-Chromkomplex-Azofarbstoffe bedeutet dies, daß zunächst die beiden dem Komplex zugrundeliegenden o,o'-Dihydroxyazofarbstoffe auf an sich bekantem Wege, wie oben beschrieben, entweder getrennt oder gemeinsam hergestellt werden und die Mischung anschließend erfindungsgemäß chromiert wird. Dabei gelangt man zu Mischungen, in denen sowohl die unsymmetrischen als auch die symmetrischen Chromkomplexe vorliegen.

Bevorzugt ist die Zugabe der Glykolverbindung IV. Die Zugabe erfolgt dabei vorzugsweise nach der Reaktion.

Wenn man eine Mischung aus Alkanolamin III und Glykolverbindung IV zugibt, beträgt das Gewichtsverhältnis Alkanolamin III:Glykolverbindung IV beispielsweise 1:1 bis 1:2, vorzugsweise 1:2.

Die aromatische Hydroxycarbonsäure wird üblicherweise in einer Menge von 0,5 bis 4 Gew.%, vorzugsweise 0,5 bis 2 Gew.%, jeweils bezogen auf die resultierende Farbstofflösung, zugegeben. Das Gewicht der resultierenden Farbstofflösung ist dabei im allgemeinen in etwa dem das Reaktionsgemisches gleichzusetzen.

Alkanolamin III und/oder Glykolverbindung IV werden im allgemeinen in einer Menge von 0,5 bis 5 Gew.%, vorzugsweise 2 bis 4,5 Gew.%, jeweils bezogen auf die resultierende Farbstofflösung, zugegeben.

Von der Chrom(III)verbindung gibt man zweckmäßig, 0,45 bis 0,5 Moläquivalente, bezogen auf 1 Mol o,o′-Dihydroxyazofarbstoff, zu.

Der Gehalt an 1:2-Chromkomplex-Azofarbstoff I liege üblicherweise bei 15 bis 40 Gew.%, vorzugsweise 15 bis 25 Gew.%, jeweils bezogen auf die resultierende Farbstofflösung.

Ein Vorteil des erfindungsgemäßen Verfahrens besteht darin, daß die Chromierungsreaktion sehr schnell abläuft, wobei der 1:2-Chromkomplex-Azofarbstoff in hoher Ausbeute und Reinheit anfällt.

Es wird vermieden, daß man zunächst den 1:1-Chromkomplex im stark sauren Milieu herstellen muß, um ihn schließlich durch Anlagerung eines weiteren Azofarbstoffs bei höherem pH-Wert in den 1:2-Chromkomplex überzuführen.

Die mittels des neuen Verfahrens hergestellten wäßrigen Farbstofflösungen besitzen eine ausgezeichnete Stabilität. Insbesondere ist die gute Kältestabilität zu erwähnen. Aufgrund der geringen Mengen an Alkanolamin und/oder Glykolverbindung ist sichergestellt, daß bei der Anwendung der erfindungsgemäß hergestellten Lösungen nur eine geringe Abwasserbelastung auftritt.

Die aus dem erfindungsgemäßen Verfahren resultierenden Farbstofflösungen eignen sich in vorteilhafter Weise zum Färben von natürlichen und synthetischen Polyamiden, wie Wolle, Seide, Leder oder Nylon, sowie von Papier und von Holz.

Die folgenden Beispiele sollen die Erfindung näher erläutern.

Beispiel 1

25 g 1-Diazonaphth-2-ol-4-sulfonsäure wurden in üblicher Weise mit 15 g Naphth-2-ol in wäßrig-alkalischem Milieu gekuppelt. Der Farbstoffsuspension wurden 4 g 4-Hydroxyisophthalsäure und 14,5 g eines basichen Chrom(III)sulfats (26 % $Cr_2O_3$) zugesetzt und das Gemisch unter Rühren auf 100°C erwärmt. Durch Zugabe von Salzsäure und anschließend von Natronlauge wurde der pH-Wert über 2,5 Stunden zwischen 4,0 und 5,0 gehalten, danach war die 1:2-Chromkomplexbildung beendet. Man setzte dann 3 g Diethanolamin zu. Mittels der erhaltenen stabilen 1:2-Chromkomplex-Azofarbstofflösung lassen sich natürliche und synthetische Polyamide, wie Wolle, Seide, Leder und Nylon sowie Papier und Holz in dunkelblauen Tönen färben.

Beispiel 2

Dem in üblicher Weise wäßrig hergestellten o,o′-Dihydroxyazofarbstoff aus 59 g 7-Nitro-1-diazonaphth-2-ol-4-sulfonsäure und 47 g Naphth-2-ol-6-sulfonsäure setzte man 5,5 g Salicylsäure und 4 g Diethylenglykolmonoethylether zu. Man erhitzte die Suspension unter Rühren auf 90°C, fügte 26 g eines gemischten basischen Chrom(III)formiats und -sulfats (30 % Cr% $Cr_2O_3$) zu und rührte die Mischung 3 Stunden bis zur beendeten 1:2-Chromkomplexbildung. Dabei hielt man den pH-Wert durch Zugabe von Natriumhydrogencarbonat zwischen 4,5 und 6,0. Man erhielt eine stabile Farbstofflösung, die natürliche und synthetische Polyamide sowie Holz und Papier in schwarzen Tönen färbt.

Beispiel 3

Einer wäßrigen Suspension aus 12,5 g 1-Diazonaphth-2-ol-4-sulfonsäure und 15 g 1-Diazo-7-nitronaphth-2-ol-4-sulfonsäure wurden 15 g Naphth-2-ol, alkalisch gelöst in Wasser, unter Zusatz von 2 g N,N-Diethylethanolamin und 2 g Ethylenglykolmonobutylether, zugefügt. Nach beendeter Kupplung in schwach alkalischem Bereich erwärmte man die Suspension auf 90°C und fügte 93 g Chrom(III)acetat und 2,5 g Naphth-2-ol-3-carbonsäure zu. Man rührte das Gemisch bei pH 5,0 bis 6,0 und 100 bis 102°C 3,5 Stunden, dann waren die 1:2-Chromkomplexe vollständig gebildet.

Man löste dann 1 g Oxalsäure im Gemisch auf und verdünnte mit 30 ml Wasser. Nach Klärfiltration erhielt man eine stabile 1:2-Chromkomplex-Farbstofflösung, die natürliche und synthetische Polyamide wie Wolle, Seide, Leder und Nylon sowie Papier und Holz in echten violetttichig schwarzen Tönen färbt.

Als man N,N-Diethylethanolamin und Ethylenglykolmonobutylether durch Diethylenglykolmonobutylether ersetzte, erhielt man eine Farbstofflösung mit ähnlichen Eigenschaften.

Die in der folgenden Tabelle aufgeführten 1:2-Chromkomplex-Azofarbstoffe der Formel

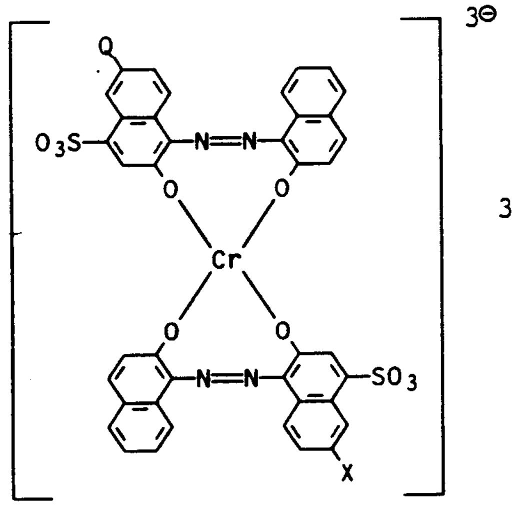

3 Kat$^{\oplus}$

werden in analoger Weise erhalten.

Tabelle

| Beispiel Nr. | Q | X | Kat$^{\oplus}$ | Chrom-Verbindung | arom. Hydroxycarbonsäure |
|---|---|---|---|---|---|
| 4 | H | H | $Na^{\oplus}$, $H^{\oplus}$ | Chrom(III)sulfat | Salicylsäure |
| 5 | H, $NO_2$ | H, $NO_2$ | $Na^{\oplus}$ | Chrom(III)formiat | Naphth-2-ol-3-carbonsäure |
| 6 | $SO_3H$ | $SO_3H$ | $Li^{\oplus}$ $HN^{\oplus}(C_2H_4OH)_3$ | Chrom(III)oxid | 2-Hydroxy-4-hydroxysulfonylbenzolsäure |
| 7 | $NO_2$ | $NO_2$ | $Na^{\oplus}$, $H^{\oplus}$ | gemischtes bas. Chrom(III)formiat und -sulfat (30 % $Cr_2O_3$) | Salicylsäure |
| 8 | H, $SO_3H$ | H, $SO_3H$ | $NH_4^{\oplus}$, $Na^{\oplus}$ | bas. Chrom(III)sulfat (26 % $Cr_2O_3$) | Salicylsäure |
| 9 | H | H | $H_2N^{\oplus}(C_2H_4OH)_2$ | bas. Chrom(III)sulfat (26 % $Cr_2O_3$) | Salicylsäure |
| 10 | $NO_2$ | $NO_2$ | $Na^{\oplus}$, $H^{\oplus}$ | gemischtes bas. Chrom(III)formiat und -sulfat (30 % $Cr_2O_3$) | 4-Hydroxyisophthalsäure |
| 11 | $NO_2$ | $NO_2$ | $HN^{\oplus}(C_3H_6OH)_3$ | gemischtes bas. Chrom(III)formiat und -sulfat (30 % $Cr_2O_3$) | Salicylsäure |

Tabelle (Fortsetzung

| Beispiel Nr. | Menge an arom. Carbonsäure [Gew.%] | pH-Bereich | Alkanolamin/ Glykolderivat | Menge an Alkanolamin/ Glykolderivat [Gew.%] | Farbton |
|---|---|---|---|---|---|
| 4 | 3 | 5,0-6,0 | Ethylenglykolmonobutylether | 5 | Blau |
| 5 | 2 | 4,0-5,5 | Acetat von Ethylenglykolmonomethylether | 2 | Violettstichiges Schwarz |
| 6 | 4 | 4,0-4,5 | Triethanolamin | 3 | Violettstichiges Schwarz |
| 7 | 1,5 | 4,2-5,0 | Diethylenglykolmonobutylether | 3,5 | Schwarz |
| 8 | 1 | 5,0-6,0 | Diethylenglykolmonobutylether | 0,5 | Blau |
| 9 | 3 | 4,4-6,0 | Ethylenglykolmonobutylether | 1 | Blau |
| 10 | 2,5 | 5,0-6,0 | Ethylenglykol | 4,5 | Grünstichiges Schwarz |
| 11 | 3,5 | 4,8-6,0 | Tripropanolamin | 3 | Schwarz |

## Patentansprüche

1. Verfahren zur Herstellung von stabilen wäßrigen Lösungen von 1:2-Chromkomplex-Azofarbstoffen der Formel I

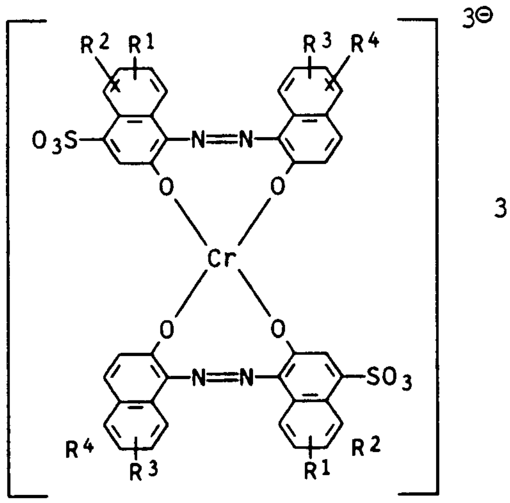

3 Kat$^{\oplus}$ (I),

in der

$R^1$ und $R^2$ gleich oder verschieden sind und unabhängig voneinander jeweils Wasserstoff, Chlor, Brom, Nitro oder Hydroxysulfonyl,

$R^3$ und $R^4$ gleich oder verschieden sind und unabhängig voneinander jeweils Wasserstoff, Hydroxy, Amino, Hydroxysulfonyl oder Carboxyl und

Kat$^{\oplus}$ das Äquivalent eines Kations bedeuten, durch Umsetzung der chromfreien o,o'-Dihydroxyazofarbstoffe mit einer Chrom(III)verbindung bei atmosphärischem Druck und bei einer Temperatur von 90 bis 105 °C, dadurch gekennzeichnet, daß man die Umsetzung bei einem pH-Wert von 4,0 bis 6,5 in Gegenwart einer aromatischen Hydroxycarbonsäure der Formel II

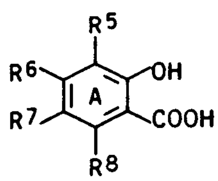

(II),

in der

$R^5$, $R^6$, $R^7$ und $R^8$ gleich oder verschieden sind und unabhängig voneinander jeweils Wasserstoff, Chlor, Brom, Hydroxysulfonyl oder Carboxyl bedeuten und der Ring A gegebenenfalls benzoanelliert ist, wobei der anellierte Benzoring noch substituiert sein kann,

vornimmt und dem Reaktionsgemisch vor, während oder nach der Umsetzung ein Alkanolamin der Formel III

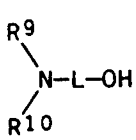

(III),

in der

$R^9$ und $R^{10}$ gleich oder verschieden sind und unabhängig voneinander jeweils Wasserstoff, $C_1$-$C_4$-Alkyl oder durch Hydroxy oder $C_1$-$C_4$-Alkoxy substituiertes $C_2$-$C_4$-Alkyl und

L $C_2$-$C_3$-Alkylen bedeuten,

und/oder eine Glykolverbindung der Formel IV

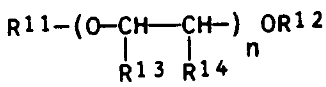

(IV),

in der

n 1 bis 18,

$R^{11}$ und $R^{12}$ gleich oder verschieden sind und unabhängig voneinander jeweils Wasserstoff, $C_1$-$C_{10}$-Alkyl, Formyl oder Acetyl und

$R^{13}$ und $R^{14}$ gleich oder verschieden sind und unabhängig voneinander jeweils Wasserstoff, $C_1$-$C_{10}$-Alkyl oder 2-($C_1$-$C_{10}$-Alkoxy)ethyl bedeuten,

zusetzt.

**2.** Verfahren gemäß Anspruch 1, dadurch gekennzeichnet, daß man die Umsetzung bei einem pH-Wert von 4,0 bis 5,5 vornimmt.

## Claims

**1.** A process for preparing a stable aqueous solution of a 1:2 chromium complex azo dye of the formula I

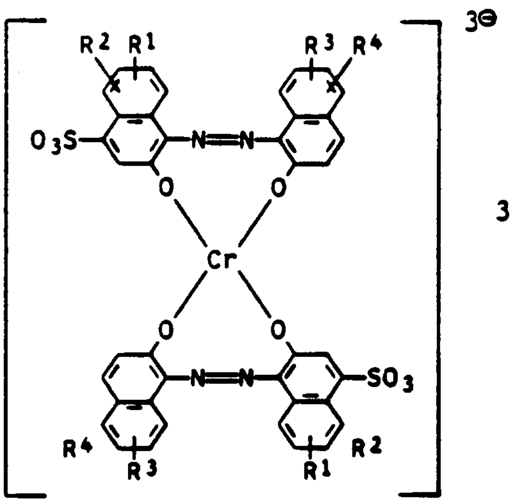

3 Cat$^{\oplus}$ (I)

where

$R^1$ and $R^2$ are identical or different and each is independently of the other hydrogen, chlorine, bromine, nitro or hydroxysulfonyl,

$R^3$ and $R^4$ are identical or different and each is independently of the other hydrogen, hydroxyl, amino, hydroxysulfonyl or carboxyl and

Cat$^{\oplus}$ is the equivalent of a cation, by reaction of the chromium-free o,o'-dihydroxyazo dyes with a chromium (III) compound under atmospheric pressure at from 90 to 105 °C, which comprises carrying out the reaction at a pH of from 4.0 to 6.5 in the presence of an aromatic hydroxycarboxylic acid of the formula II

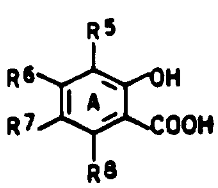

(II)

where

$R^5$, $R^6$, $R^7$ and $R^8$ are identical or different and each is independently of the others hydrogen, chlorine, bromine, hydroxysulfonyl or carboxyl and the ring A may be benzofused with a ring which may be further substituted,

and adding to the reaction mixture before, during or after the reaction an alkanolamine of the formula III

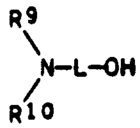

(III)

where

$R^9$ and $R^{10}$ are identical or different and each is independently of the other hydrogen, $C_1$-$C_4$-alkyl or hydroxyl- or $C_1$-$C_4$-alkoxy-substituted $C_2$-$C_4$-alkyl and

L is $C_2$-$C_3$-alkylene,

and/or a glycol compound of the formula IV

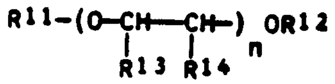

(IV)

where

n is from 1 to 18,

$R^{11}$ and $R^{12}$ are identical or different and each is independently of the other hydrogen, $C_1$-$C_{10}$-alkyl, formyl or acetyl, and

$R^{13}$ and $R^{14}$ are identical or different and each is independently of the other hydrogen, $C_1$-$C_{10}$-alkyl or 2-($C_1$-$C_{10}$-alkoxy) ethyl.

2. A process as claimed in claim 1, wherein the reaction is carried out at a pH of from 4.0 to 5.5.

## Revendications

1. Procédé de préparation de solutions aqueuses stables de complexe de chrome-colorants azoïques dans un rapport molaire de 1:2 de formule I

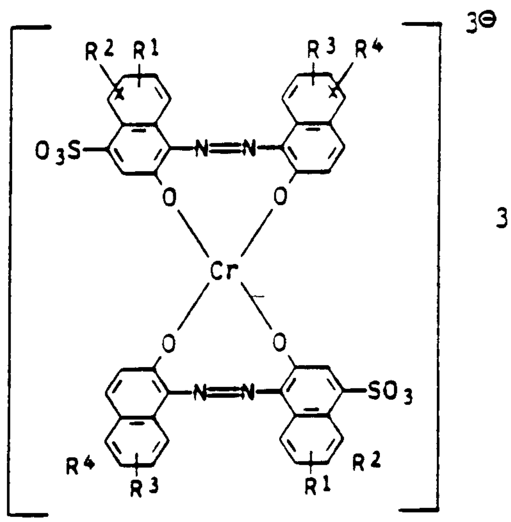

3 Cat$^{\oplus}$ (I),

dans laquelle

$R^1$ et $R^2$ sont identiques ou différents et représentent chacun indépendamment l'un de l'autre un atome d'hydrogène, de chlore, de brome, un groupe nitro ou hydroxysulfonyle,

$R^3$ et $R^4$ sont identiques ou différents et représentent chacun indépendamment l'un de l'autre un atome d'hydrogène. un groupe hydroxy, amino, hydroxysulfonyle ou carboxyle et

cat$^+$ représente l'équivalent d'un cation, par réaction des colorants o,o'-dihydroxyazolques exempts de

chrome avec un composé du chrome (III) à pression atmosphérique et à une température comprise entre 90 et 105 ° C, caractérisé en ce que l'on effectue la réaction à une valeur du pH de 4,0 à 6,5 en présence d'un acide hydroxycarboxylique aromatique de formule II

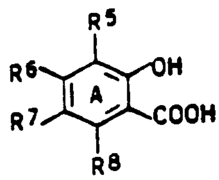

(II),

dans laquelle

$R^5$, $R^6$, $R^7$ et $R^8$ sont identiques ou différents, et représentent chacun indépendamment l'un de l'autre un atome d'hydrogène, de chlore, de brome, un groupe hydroxysulfonyle ou carboxyle et le noyau A est éventuellement soumis à une condensation de noyau benzénique, le noyau benzénique condensé pouvant alors être encore substitué, et en ce que l'on ajoute au mélange réactionnel une alcanolamine de formule III

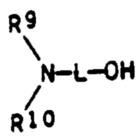

(III),

dans laquelle

$R^9$ et $R^{10}$ sont identiques ou différents et représentent chacun indépendamment l'un de l'autre un atome d'hydrogène, un groupe alkyle en $C_1$ à $C_4$, ou alkyle en $C_2$ à $C_4$ substitué par un groupe hydroxy ou alcoxy en $C_1$ à $C_4$ et

L représente un groupe alkylène en $C_2$ à $C_3$,

et/ou un composé glycolique de formule IV

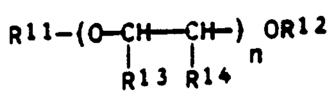

(IV),

dans laquelle

n est un nombre compris entre 1 et 18,

$R^{11}$ et $R^{12}$ sont identiques ou différents et représentent chacun indépendamment l'un de l'autre un atome d'hydrogène, un groupe alkyle en $C_1$ à $C_{10}$, formyle ou acétyle et

$R_{10}$ et $R_{14}$ sont identiques ou différents et représentent chacun indépendamment l'un de l'autre un atome d'hydrogène, un groupe alkyle en $C_1$ à $C_{10}$ ou 2-(alcoxy en $C_1$ à $C_{10}$)-éthyle,

avant, pendant ou après la réaction.

**2.** Procédé selon la revendication 1, caractérisé en ce que l'on effectue la réaction à une valeur du pH de 4,0 à 5,5.